# EUROPÄISCHE PATENTSCHRIFT

(11) **EP 0 885 033 B1**
(45) Veröffentlichungstag und Bekanntmachung des Hinweises auf die Patenterteilung: **27.10.2004**
(21) Anmeldenummer: 97917238.4
(22) Anmeldetag: 15.02.1997
(51) Int. Cl.: A63B 55/08, G01C 22/00, G07B 15/02, G07F 7/00

(54) **INFORMATIONSSYSTEM FÜR GOLFWAGEN UND SYSTEM ZUR BENUTZUNGSABRECHNUNG UND/ODER BENUTZUNGSDATENERFASSUNG**
INFORMATION SYSTEM FOR GOLF CARTS AND SYSTEM FOR CALCULATION OF USE AND/OR ACQUISITION OF USE DATA
SYSTEME D'INFORMATION POUR VOITURETTE DE GOLF ET SYSTEME POUR COMPTABILISATION DE L'UTILISATION ET/OU SAISIE DES DONNEES D'UTILISATION

(30) Priorität: 15.02.1996 DE 19605682; 27.09.1996 DE 29616667 U
(43) Veröffentlichungstag der Anmeldung: 23.12.1998
(73) Patentinhaber: Albertshofer, Christian, 98617 Meiningen (DE)
(72) Erfinder: Albertshofer, Christian, 98617 Meiningen (DE)
(74) Vertreter: Zipse + Habersack
(86) Internationale Anmeldenummer: PCT/DE1997/000327
(87) Internationale Veröffentlichungsnummer: WO 1997/029810

(56) Entgegenhaltungen:
- CH-A- 657 329
- FR-A- 2 535 491
- GB-A- 2 178 211
- GB-A- 2 280 509
- US-A- 5 044 634
- US-A- 5 438 319
- US-A- 5 438 518

## Beschreibung

Die vorliegende Erfindung betrifft ein Informationssystem zur Anzeige von Daten an einem Fahrzeug zur Beförderung von wenigstens einer Person beim Golfspiel.

Es ist bekannt, für den Transport von Personen auf Golfplätzen kleine Fahrzeuge zu verwenden, die zur Aufnahme mindestens einer Person und deren Golfausrüstung konzipiert sind. Diese Fahrzeuge sind sehr klein und wendig und sind mit breiten Reifen versehen, so daß sie auf dem Golfplatz keine Schäden hinterlassen. Derartige Fahrzeuge sind meist mit Verbrennungsmotoren oder Elektroantrieben versehen.

Es ist weiterhin bekannt, derartige Wägen mit einem Display, z. B. einem Tachometer zur Anzeige von Fahrdaten zu versehen.

Es ist weiterhin aus der DE 42 02 130 A1 bekannt, beim Golfspiel bedeutsame Daten auf einem Display darzustellen. In dieser Anmeldung sind an einem Golfwagen ein Wegsensor und eine mit einem Display versehene Steuereinheit angeordnet, welche Platzdaten gespeichert hat, so daß über die Streckenmessung mittels des Wegsensors die ungefähre Entfernung zu einem Loch angegeben werden kann. Diese Daten können zur Erzeugung weiterer Daten genutzt werden, wie z. B. für Vorschläge, einen bestimmten Schlägertyp zu wählen.

Die WO 94/28512 offenbart ein Abrechnungssystem unter Nutzung einer Chipkarte, bei welchem System Abrechnungsgebühren für die Nutzung bestimmter Verkehrswege auf der Chipkarte während der Nutzung eines Fahrzeuges verändert werden. Dieses System ermöglicht eine einfache Abrechnung von Autobahngebühren ohne Stopps an den Ausfahrten der Autobahn.

Die US 5,044,634 zeigt ein Golf-Informationssystem, bei welchem ein Spieler mit Positionsund Distanzangaben über seine Position auf dem Golfcourt informiert wird. Hierfür weist das System des Golfwagens eine Sendeempfangseinheit auf, die Sendemarken am Golfplatz zur Abgabe von Positionsinformation aktiviert, welche Information über Funk von dem Golfwagen empfangen und zur Anzeige gebracht wird.

Es ist Ziel der vorliegenden Erfindung, ein System bereitzustellen, welches die Darstellung von weiteren Informationen auf einem Display des Fahrzeugs in Abhängigkeit vom Betrieb des Fahrzeugs oder von einer Eingabetätigkeit ermöglicht.

Diese Aufgabe wird durch ein Informationssystem mit den Merkmalen des Anspruchs 1 gelöst.

Das erfindungsgemäße Informationssystem basiert auf einer Basisstation, die im Bereich eines Club- oder Spielgeländes angeordnet ist. Diese Basisstation enthält eine Steuerung und einen Speicher zur Erfassung von Fahrdaten und sonstigen Informationen, wie z. B. Werbeinformationen. An dem Fahrzeug ist eine Steuerungseinheit ausgebildet, die zumindest eine erste Steuerungslogik zur Verarbeitung und Anzeige der Fahrdaten des Fahrzeugs und eine zweite Steuerungslogik zur Verarbeitung und Anzeige der weiteren Informationen auf einem am Fahrzeug angeordneten graphische Display aufweist.

Um einen Datenaustausch zwischen der Basisstation und dem Fahrzeug ermöglichen zu können, verfügen sowohl die Steuerung der Basisstation als auch die Steuerungseinheit des Fahrzeugs über eine Schnittstelle zur Übertragung zumindest von Fahrdaten und weiteren Informationen zwischen der Steuerung der Basisstation und der Steuerungseinheit des Fahrzeugs. Die Übertragung kann über ein Kabel, drahtlos oder mittels eines Speichermediums erfolgen, welches zuerst in die Basisstation eingesteckt, dort beschrieben und anschließend in die Schnittstelle der Steuerungseinheit des Fahrzeugs gesteckt wird. Die Steuerungseinheit vergleicht die durch die Übertragung erhaltenen und/oder beim Betrieb des Fahrzeugs anfallenden Fahrdaten mit vorgegebenen Sollwerten und speichert daraufhin entweder das Vergleichsergebnis als aktuelle Fahrdaten ab und/oder zeigt eine aus dem Vergleichsergebnis abgeleitete Meldung auf dem Display an und/oder wirkt auf den Betrieb des Fahrzeugs ein.

Mögliche Fahrdaten wären z. B. Zugangsberechtigung einer Person zur Benutzung des Fahrzeugs, ein Benutzungskonto für die Benutzung des Fahrzeugs, Identifikationsdaten der das Fahrzeug benutzenden Person, Kilometerstand des Fahrzeugs, Geschwindigkeit, Ladung der Akkumulatoren bzw. Tankinhalt, Zustand von technischen Aggregaten des Fahrzeugs, wie z. B. Bremsbeläge, Motoröl und zeitliche Daten, wie z. B. Beginn einer Fahrt, Dauer der Fahrt, Fahrtunterbrechungen, Ende der Fahrt, insgesamt aufgelaufene Fahrzeit des Fahrzeugs, Dauer der Anzeige der weiteren Informationen.

Die zweite Steuerungslogik der Steuerungseinheit des Fahrzeugs zeigt die weiteren Informationen, wie z. B. Werbung, auf dem graphischen Display in Abhängigkeit von den Fahrdaten und/oder den Betriebszustand des Fahrzeugs an. So kann z. B. eine Werbung auf dem Display bei Inbetriebnahme des Fahrzeugs durch eine Person angezeigt werden. Ebenso kann eine Werbung auf dem Display eingeblendet werden, wenn das Fahrzeug längere Zeit nicht benutzt wird und/oder auf einer Eingabetastatur für Spieldaten längere Zeit keine Daten eingegeben worden sind. Die Werbung kann dann in ähnlicher Weise wie der softwaremäßige Bildschirmschoner eines Computers angezeigt werden. Die zweite Steuerungslogik zur Auswertung und Anzeige der weiteren Daten überprüft in definierten Zeitpunkten, wie z. B. bei Beginn und Ende der Benutzung, oder kontinuierlich bzw. in definierten Zeitabständen die Fahrdaten bzw. den Betriebszustand des Fahrzeugs. Auf diese Weite kann die zweite Steuerungslogik sicherstellen, daß die Anzeige der weiteren Informationen nicht zu Zeitpunkten erfolgt, die sicherheitsrelevant sind, z. B. während der Fahrt mit dem Fahrzeug, oder zu Zeitpunkten, in denen das Display gerade zur Eingabe und Anzeige von Spieldaten genutzt wird.

Vorzugsweise verfügt daher die Steuerungseinheit des Fahrzeugs über eine dritte Steuerungslogik zur Verarbeitung und Anzeige von Spieldaten. In diesem Falle ist an dem Fahrzeug auch eine Eingabevorrichtung zur Eingabe von Spieldaten in die Steuerungseinheit angeordnet.

Vorzugsweise werden die von der Basisstation an die Steuerungseinheit des Fahrzeugs unmittelbar oder über ein Speichermedium mittelbar übertragenen Daten dazu genutzt, den Zugriff einer Person auf das Fahrzeug zu regeln. In diesem Sinne könnten z. B. Daten übertragen werden, die angeben, ob die Person, die gerade das Fahrzeug benutzen will, dazu befugt ist das Fahrzeug zu benutzen, oder ein Konto dieser Person für die Benutzung des Fahrzeugs während des laufenden Betriebs zu belasten. Auf diese Weise kann die clubinterne Vergabe der Fahrzeuge unter den Mitgliedern überprüft und geregelt werden. So könnte z. B. die Datenübertragung zwischen der Basisstation und dem Fahrzeug prinzipiell über Speichermedien bewirkt werden. In diesem Fall hätte jedes Mitglied ein derartiges Speichermedium, z. B. eine Chipkarte, auf der ein Benutzungskonto und Identifikationsdaten des Mitglieds gespeichert sind. Vor einer Fahrzeugbenutzung wäre das Speichermedium an der Basisstation zu aktualisieren und anschließend in die entsprechende Schnittstelle am Fahrzeug einzustecken. Das Fahrzeug könnte daraufhin sofort die Identifizierung des Clubmitglieds oder eines Gastes vornehmen und das Fahrzeug zur Benutzung freigeben bzw. sperren. Während der Benutzung könnte dann ein Wert für ein Benutzungskonto in Abhängigkeit von der Benutzungsdauer des Fahrzeugs oder der zurückgelegten Wegstrecke belastet werden. Zusätzlich könnten auf dem Speichermedium Fahrdaten des Fahrzeugs, wie z. B. Stand der Betriebsstoffe und weitere fahrzeugspezifische Daten, wie z. B. zurückgelegte Fahrstrecke, Nutzungsstunden, Wartungsanforderung etc. gespeichert werden, die beim Einlesen in die Basisstation zur Automatisierung der Fahrzeugwartung genutzt werden könnten.

Die Benutzung des Fahrzeugs könnte auch durch geeignete Sponsoren, wie z. B. Firmen unterstützt werden, die sich an dem Fahrzeughaltungsetat beteiligen, wenn im Gegenzug Firmenwerbung auf dem Display der Fahrzeuge angezeigt wird. Hierfür ist ein graphisches Display erforderlich, das die Werbung in ansprechender Weise vermittelt. Mittels des erfindungsgemäßen Informationssystems ist es möglich, diese Werbung gezielt zu bestimmten Zeitpunkten auf dem Graphikdisplay des Fahrzeugs anzuzeigen.

Vorzugsweise ist die Basisstation eines Club- oder Spielgeländes über ein Modem oder per Funk an ein Datenübertragungsnetz angeschlossen. Ein derartiges Netz kann ein herkömmliches Kabelnetz oder kabelloses Netz sein. Über das Datenübertragungsnetz sind die Basisstationen mehrerer Cluboder Spielgelände vorzugsweise mit einem Server verbunden, der die Vergabe der weiteren Informationen regelt. Dieser Server kann den Datenstand der weiteren Informationen in regelmäßigen oder unregelmäßigen Abständen aktualisieren bzw. ändern. Auf diese Weise können die Graphikanzeigen der Golffahrzeuge in automatisierter Weise als Werbeflächen genutzt werden. Die erhaltenen Einnahmen aus der Darstellung der weiteren Informationen können zur Deckung der Fahrzeugparkkosten verwendet werden. Auf diese Weise können die Clubs und damit letztendlich auch die Mitglieder von den bislang hohen Fahrzeugkosten weitgehend entlastet werden.

Weiterhin ist es möglich, daß Fahrdaten, wie z. B. Verschleiß oder Wartungsdaten der Fahrzeuge von den verschiedenen Basisstationen an den Server übermittelt werden, wodurch es möglich ist, einen zentralen Wartungsservice gezielt einzusetzen, wenn man anhand dieser Fahrdaten erkennen kann, daß die Fahrzeuge in bestimmten Clubs gewartet werden müssen.

Alternativ zu dem vorab geschilderten Informationssystem, bei welchem die Fahrdaten und weiteren Informationen gemeinsam von der Basisstation auf das Fahrzeug übertragen werden, ist es auch möglich, diese Daten getrennt zu übertragen. Da die Daten für die weiteren Informationen in ihrer Form als graphische Daten sehr viel Speicherplatz genötigten, ist es auch möglich, diese Daten über Kabel z. B. gemeinsam mit dem Aufladen der Batterien bei Elektrofahrzeugen zu dem Fahrzeug zu übertragen. Die Übertragung der Fahrdaten Könnte dann anhand der Speichermedien, z.B. der Chipkarte erfolgen.

Weiterhin wäre es Möglich, daß man auf den Einsatz von Speichermedien ganz verzichtet, so daß alle Daten direkt von der Basisstation auf ein Fahrzeug, z. B. mittels Kabel, übertragen werden. In diesem Fall könnte ein Clubmitglied eine persönliche Kennzahl eingeben, wodurch das Fahrzeug erkennen würde, welches Clubmitglied gerade das Fahrzeug benutzt. Der Speicher für das Benutzungskonto dieses Clubmitgliedes wäre dann im Fahrzeug angeordnet und der Speicherinhalt würde beim nächsten Übertragungsvorgang in die Basisstation zur Aktualisierung übermittelt. Es ist ebenfalls möglich, den Datenaustausch zwischen Basisstation und Fahrzeug durch ein begrenztes lokales Funknetz vorzunehmen, wodurch Daten zwischen Basisstation und Fahrzeug ständig aktualisiert werden könnten. Auf diese Weise wäre es auch möglich, den Benutzer des Fahrzeugs, der sich gerade irgendwo auf dem Golfgelände befindet, eine Nachricht zukommen zu lassen, z. B. daß gerade ein Anruf für ihn eingegangen ist, oder bei Ärzten z. B. die Meldung eines Notfalls.

Die am Fahrzeug befindliche Steuerungseinheit kann zur Ermittlung von aktuellen Fahrdaten des Fahrzeugs mit unterschiedlichsten Sensoren, wie z. B. Abstandsmesser, Treibstoffmesser, Wegstreckenmesser, Motortemparaturfühler etc. verbunden sein. Es können nicht nur Fahrdaten über das Fahrzeug erhalten werden, sondern auch Spieldaten, wie z. B. die von einem Abschlagplatz zum Aufschlagplatz des Balls zurückgelegte Strecke. Diese Strecke kann über den mit dem Tachometer gekoppelten Wegstreckensensor, der mit einem der Räder verbunden ist, ermittelt werden.

Die Datenübertragung zwischen der Steuerungseinheit des Fahrzeugs und der Basisstation kann entweder durch Kabel, durch Chipkarten, durch Transponder, mittels Infrarot, mittels Laserlicht oder mittels Funk realisiert werden. Es sind auch weitere bislang nicht gängige Übertragungsmöglichkeiten nutzbar. Die Basisstation kann ein Computer sein, der mit den notwendigen Peripheriegeräten, wie Speichern, Eingabe- und Ausgabegeräten versehen ist.

Das graphische Display kann bei einem Elektrofahrzeug über die Batterie betrieben werden. Bei einem Verbrennungsmotor kann der Betrieb über die Lichtmaschine des Verbrennungsmotors erfolgen, wobei ein Akkumulator für den unabhängigen Betrieb des Displays vorgesehen sein kann. Auf diese Weise ist die Anzeige von Informationen möglich, bevor der Motor gestartet wird.

Das graphische Display hat vorzugsweise eine hochauflösende Grafik z. B. 240x 320 Bildpunkte aufzuweisen, damit die weiteren Informationen in einer gewünschten Genauigkeit dargestellt werden können. Als Display eignen sich monochrome oder farbige LCD-Displays. Die Verwendung von Bildschirmen in Kathodenstrahltechnik ist auf Grund des hohen Energiebedarfs zwar weniger sinnvoll, jedoch nicht ausgeschlossen.

Die Basisstation kann mit einer Wettermeßstation verbunden sein, die in der Lage ist, Luftfeuchtigkeit, Windrichtung und Windstärke zu bestimmen. Diese Daten können von der Basisstation ebenfalls auf die Steuerungseinheit des Fahrzeugs übertragen und in dem Display zur Anzeige gebracht werden, wo sie als Hilfe bei der Bestimmung des Schlägers und der Schlagrichtung verwendet werden können. Auf diese Weise läßt sich auch das Golfspiel selbst verbessern.

Der Golfspieler kann nach seinem Spiel seine auf der Chipkarte gespeicherten Score im Clubhaus auf ein Formular ausdrucken lassen.

### DIE ERFINDUNG BETRIFFT AUSSERDEM EIN SYSTEM ZUR BENUTZUNGSABRECHNUNG UND/ODER BENUTZUNGSDATENERFASSUNG ELEKTRISCH ODER MOTORISCH BETRIEBENER GERÄTE

Viele Unternehmen leihen, mieten oder leasen sich heutzutage elektrisch oder motorisch betriebene Geräte, um Investitionskosten einzusparen und damit die Liquidität zu erhalten.

Die Abrechnung derartiger Leistungen erfolgt in der Regel zum einen zeitabhängig, zum anderen jedoch auch leistungsabhängig, d.h. in Abhängigkeit von Dauer und Intensität der Benutzung. Letztere Daten werden entweder auf einen Kilometerzähler oder einen Betriebsstundenzähler erfaßt oder werden von den Benutzern schriftlich festgehalten. Derartige Angaben können jedoch durch Manipulation des Betriebsstunden- oder Streckenzählers manipuliert werden bzw. es können unrichtige Angaben gemacht werden, weshalb der tatsächliche Verschleiß des Gerätes über den Stand hinausgeht, den die Verleih-, Vermiet- oder Leasing-Firma aufgrund der erhaltenen Angaben kalkuliert.

Es besteht somit ein Bedarf für diese Firmen, ein System zu erhalten, das eine genaue Bestimmung und/oder Abrechnung der Benutzungs- bzw. Abrechnungsdaten erlaubt.

Ein derartiges System wird durch die kennzeichnenden Merkmale des Anspruchs 12 geschaffen. Vorteilhafte Weiterbildungen der Erfindung sind Gegenstand der zugehörigen Unteransprüche.

Erfindungsgemäß ist bei einer Verleih-, Vermiet- oder Leasingfirma, nachfolgend kurz Gerätegeberin genannt, eine Basisstation vorgesehen, die über einen Speicher für Betriebsdaten, Abrechnungsdaten, evtl. Betriebsparameter etc. als auch über eine Schreib/Leseeinrichtung für ein Speichermedium verfügt, das eine gewisse Speicherkapazität aufweist, z.B. eine Chipkarte.

Weiterhin ist jedes Gerät mit einer Schreib-/Leseeinrichtung für das Speichermedium versehen, so daß es möglich ist, Benutzungs- als auch Abrechnungsdaten zwischen der Basis und den Geräten zu übertragen. Vorteilhafterweise ist es auch möglich, Sollwerte oder andere Betriebsparameter, Abrechnungstabellen etc. über die Chipkarte zum Gerät zu übertragen.

Damit das Gerät benutzt werden kann, muß der Ausleiher oder die Benutzungsfirma von der Gerätegeberin eine Chipkarte ausgehändigt bekommen, die der Gerätenehmerin, d.h. dem Unternehmen, das das Gerät mietet, leiht oder least, die Benutzung des Geräts gestattet.

Erst wenn die Chipkarte in die Schreib-/Leseeinrichtung des Geräts gesteckt wird und die Steuerungseinheit des Geräts festgestellt hat, daß sich eine gültige Chipkarte in der Schreib-/Leseeinheit befindet, wird das Gerät zur Benutzung freigegeben. Beim Betrieb des Gerätes anfallende Daten wie Beginn der Benutzung, Dauer der Benutzung, Ende der Benutzung, Intensität der Benutzung etc. werden nun in Benutzungsdaten erfaßt und auf der Chipkarte gespeichert. Zusätzlich oder alternativ können aus diesen Benutzungsdaten auch gleich Abrechnungsdaten erzeugt werden, die dann auf einem separaten Speicherplatz der Chipkarte gespeichert bzw. zu einem bereits vorhandenen Wert addiert oder von einem vorhandenen Wert subtrahiert werden.

Bei der Rückgabe des Gerätes kann die Gerätegeberin aufgrund der Benutzungs- oder Abrechnungsdaten sofort erkennen, in welchem Umfang das Gerät verwendet worden ist. Zeitabhängige Benutzungen, wie z.B. günstigere Benutzung am Wochenende etc., können auf diese Weise gleich erfaßt und bei der Abrechnung berücksichtigt werden.

Durch hard- und softwaremäßige Spezifikationen kann die Chipkarte so ausgebildet werden, daß sie nur von dem Gerät in der Basisstation oder in dem Gerät gelesen und beschrieben werden kann, für das sie bestimmt ist.

Vorzugsweise ist ein Betriebsstromkreis des elektrisch oder motorisch betriebenen Gerätes in die Steuerungseinheit des Gerätes integriert durch welchen Stromkreis die Inbetriebnahme des Geräts detektiert wird, so daß eine Manipulation der Erfassung der Inbetriebnahme kaum möglich ist.

Es ist weiterhin möglich, unterschiedliche Sensoren wie z.B. Wegsensoren, Temperatursensoren als auch eine Uhr mit der Steuerungseinheit zu verbinden, wodurch es möglich ist, zeitbezogene Fahrdaten zu erhalten, die Auskunft über die Benutzungsleistung, den Benutzungsumfang und Betriebsparameter enthalten.

Mit der Rückgabe des Gerätes erhält die Gerätegeberin die Chipkarte zurück und kann nun aufgrund der auf der Chipkarte erhaltenen Daten eine genaue Abrechnung und Abnutzungseinschätzung des Gerätes vornehmen.

Als Speichermedium können nicht nur Chipkarten, sondern selbstverständlich auch Magnetkartenträger und andere beschreibbare Datenträger verwendet werden.

Als Geräte eignen sich Fahrzeuge, alle Arten von elektrisch, motorisch oder pneumatisch/hydraulisch angetriebenen Geräten und Maschinen, Hebebühnen und z.B. Golffahrzeuge.

Wenn in der Basis nicht nur die Abrechnungsdaten, sondern auch die Fahrdaten von dem Speichermedium eingelesen werden, so ist es möglich, die Korrektheit eventuell vom Speichermedium eingelesener Abrechnungsdaten summarisch zu überprüfen.

Bei einer zu großen Diskrepanz kann das Fahrzeug dann überprüft werden.

Es ist weiterhin möglich, in dem Gerät einen gepufferten oder Permanentspeicher vorzusehen, der alle Fahrdaten speichert. In diesem Falle kann man die über das Speichermedium erhaltenen Fahrdaten mit diesen Fahrdaten vergleichen und somit beurteilen, ob eventuell Daten auf dem Speichermedium manipuliert worden sind.

Selbstverständlich können handelsübliche hardware- und softwaremäßige Kodierungsverfahren, wie z.B. PGP, zur Kodierung der Daten auf dem Datenträger verwendet werden. Eine Manipulation dieser Daten durch den Gerätenehmer ist damit so gut wie ausgeschlossen.

In einer Ausführungsalternative der Erfindung wird auf der Chipkarte ein bestimmter Betrag in der Art einer Telefonkarte gespeichert. Bei der Benutzung des Gerätes wird die Gültigkeit dieser Karte überprüft und anschließend während der Benutzung des Gerätes entsprechend den Benutzungsdaten, wie z.B. Benutzungsdauer und Benutzungsintensität, von der Chipkarte abgebucht. Ist der auf der Chipkarte gespeicherte Guthabenbetrag abgelaufen, so ist das Gerät nicht mehr betriebsbereit und die Chipkarte muß von der Gerätegeberin wieder validiert werden.

Das Speichermedium kann einen Speicherplatz aufweisen für Benutzungsdaten, wie z.B. Benutzungszeitraum, Benutzungsdauer, Benutzungsintensität, Betriebsparameter und Identifikationsdaten wie z.B. Gerätetyp, Gerätenummer, Gerätenehmer als auch Referenz-, Soll- oder Vergleichsdaten, die von der Gerätegeberin von der Basisstation auf den internen Speicher des Gerätes überspielt werden, um da als Grundlage für spätere Validationsund Abrechnungszyklen zu dienen. Auf diese Weise können auch kundenspezifische Abrechnungsparameter, wie z.B. Rabatte, auf das Gerät übertragen und somit bei einer geräteinternen Abrechnung berücksichtigt werden. Durch einen entsprechenden Datensatz auf den Karten können somit individuelle geräte- und kundenspezifischen Abrechnungsmodi realisiert werden. Weiterhin können in derartigen Daten z.B. zeitabhängige Datentabellen, Benzinpreise, etc. enthalten sein, die ständig aktualisiert werden müssen. Diese Aktualisierung ist somit ebenfalls leicht über das Speichermedium möglich. Vorzugsweise existiert somit auf dem Speichermedium ein Speicherplatz für den Kartentyp, der die Steuereinheit des Gerätes dann automatisch veranlaßt, die entsprechenden Operationen vorzunehmen. Bei einer Aktualisierungskarte, die lediglich von der Gerätegeberin in das Gerät eingeführt wird, werden somit die Referenz-, Vergleichs- und Solldaten automatisch aktualisiert. Hingegen werden bei Eingabe einer üblichen Leihkarte lediglich die Gültigkeit und/oder der Kontostand der Karte abgefragt und sichergestellt, daß das Speichermedium während des Betriebs des Gerätes in der Schreib-/Leseeinrichtung verbleibt. Aus diesem Grunde ist das Speichermedium vorzugsweise derart in dem Gerät gehalten, daß es erst nach Beendigung der Benutzung wieder freigegeben wird. Auf diese Weise ist eine Manipulation der Karte während der Benutzung ausgeschlossen. Es sind auch kombinierte Karten möglich, welche den Datensatz im Gerät aktualisieren, als auch die Benutzung des Geräts ermöglichen.

Bei einer Gerätegeberin, die viele Filialen aufweist, oder die Geräte an vielen unterschiedlichen Standorten betreibt, sind die Basisstationen an diesen Standorten vorzugsweise über das Telefonnetz mit einem zentralen Server verbunden, der in der Basisstation Benutzungsdaten, wie z.B. Benutzungspreise, aktualisiert. Auf diese Weise wird eine einheitliche Abrechnung sichergestellt.

Für die Gerätegeberin ergibt sich aus der obigen Erfindung der Vorteil, daß sie absolut zuverlässig und sicher Daten über die Benutzung der Geräte erhält und somit die Preise für das Verleihen, Verleasen und Vermieten der Geräte entsprechend genau kalkulieren kann.

Zusätzlich lassen sich über eine genaue Erfassung der Betriebszeiträume Kostentabellen erstellen, die eine preisgünstigere Vergabe der Geräte zu wenig gefragten Zeiten ermöglichen, um so eine optimale Kapazitätsauslastung zu ermöglichen.

Eine sehr vorteilhafte Anwendung der obigen Erfindung ergibt sich z.B. auf Golfplätzen. Eine Gerätegeberin, entweder eine externe Golfwagenverleihfirma oder der Golfclub selbst hat eine Basisstation, an der Benutzungskarten für die Golfwagen ausgegeben werden. Die Preise für die Benutzung der Wagen sind gestaffelt nach den Benutzungszeiträumen. Jeder Benutzer der Anlage muß zur Benutzung des Golfwagens eine Gastkarte oder eine Mitgliedskarte besitzen.

Wenn ein Golffahrzeug benutzt werden soll, wird die Karte in den Schlitz der an dem Golfwagen angeordneten Schreib-/Leseeinrichtung gesteckt, woraufhin die Steuerungseinheit des Golffahrzeugs überprüft, ob die Karte gültig ist. Im Verlauf der Benutzung des Wagens werden die Fahrdaten oder gleich die umgerechneten Abrechnungsdaten auf die Chipkarte geschrieben bzw. von einem auf der Chipkarte existierenden imaginären Konto abgebucht, wonach in der Basisstation im Clubhaus nach der Rückkehr die tatsächlichen Benutzungskosten aufgrund der Daten errechnet werden können, die auf der Chipkarte gespeichert oder verändert wurden.

Es ist möglich, auf der Chipkarte auch einen Speicherplatz für die Identifizierung des Gerätes vorzusehen, so daß mit einer Chipkarte nur ein bestimmtes Gerät oder eine bestimmte Gerätegruppe benutzt werden kann.

Die Steuerungseinheit des Gerätes wird vorzugsweise über die Energieversorgung des Gerätes gespeist. Zusätzlich kann eine eigene Batterie vorgesehen sein, um Unterbrechungen der Stromzufuhr der zentralen Energieversorgung abzupuffern. Im Falle, daß eine eigene Energieversorgung vorgesehen ist, wird vorzugsweise ein Akkumulator verwendet, der während der Betätigung des Gerätes selbsttätig wieder aufgeladen wird.

Selbstverständlich kann die Steuerungseinheit des Geräts ein alphanumerisches oder graphisches Display zur Anzeige der Benutzungsdaten, Abrechnungsdaten oder anderer Betriebs oder Abrechnungsparameter aufweisen.

Die Fahrtrichtung kann über ein GPS- oder internes Kompaßsystem generiert und als Benutzungsdaten mit erfaßt werden.Hierdurch ist es möglich in etwa die gefahrene Wegstrecke zu erfassen. Die geräteinterne Uhr generiert vorzugsweise nicht nur die Uhrzeit sondern auch das Datum und ermöglicht so eine individuelle zeitabhängige Abrechnung, z.B. höhere oder günstigere Tarife am Wochenende und/oder während der üblichen Arbeitszeiten.

## Patentansprüche

1. Informationssystem zur Anzeige von Daten an einem Fahrzeug zur Beförderung von wenigstens einer Person beim Golfspiel, umfassend:
- eine im Bereich eines Club- oder Spielgeländes angeordnete Basisstation, die eine Steuerung und einen Speicher zur Erfassung von Fahrdaten und sonstigen Informationen aufweist,
- eine an dem Fahrzeug angeordnete Steuerungseinheit, die zumindest eine erste Steuerungslogik zur Verarbeitung und Anzeige der Fahrdaten und eine zweite Steuerungslogik zur Verarbeitung und Anzeige der weiteren Informationen auf einem am Fahrzeug angeordneten graphischen Display aufweist,
- eine sowohl an der Basisstation als auch am Fahrzeug vorgesehene Schnittstelle zur Übertragung zumindest von Fahrdaten und weiteren Informationen zwischen der Basisstation und der Steuerungseinheit,
- wobei die Steuerungseinheit die übertragenen und/oder beim Betrieb des Fahrzeugs anfallenden Fahrdaten mit vorgegebenen Sollwerten vergleicht und in Abhängigkeit vom Ergebnis des Vergleichs aktuelle Fahrdaten speichert/verändert und/oder auf dem Display anzeigt und/oder auf den Betrieb des Fahrzeugs direkt einwirkt, und die zweite Steuerungslogik die weiteren Informationen in Abhängigkeit von Fahrdaten und/oder dem Betriebszustand des Fahrzeugs auf dem graphischen Display anzeigt.

2. Informationssystem nach Anspruch 1, **dadurch gekennzeichnet, dass** die Steuerungseinheit über eine dritte Steuerungslogik zur Verarbeitung und Anzeige von Spieldaten verfügt.

3. Informationssystem nach Anspruch 2, **dadurch gekennzeichnet, dass** an dem Fahrzeug eine Eingabevorrichtung zur Eingabe von Spieldaten in die Steuerungseinheit angeordnet ist.

4. Informationssystem nach einem der vorhergehenden Ansprüche, **dadurch gekennzeichnet, dass** die zweite Steuerungslogik anhand von Betriebsbedingungen des Fahrzeugs und/oder anhand von Bedienungs- und Eingabevorgängen bestimmt, wann die weiteren Informationen auf dem Display angezeigt werden.

5. Informationssystem nach Anspruch 4, **dadurch gekennzeichnet, dass** die zweite Steuerungslogik Betriebszustände wie Inbetriebnahme und/oder längere Bedienungs- oder Eingabepausen über Betriebssensoren erkennt, und daraufhin veranlasst, dass die weiteren Informationen auf dem Display angezeigt werden.

6. Informationssystem nach einem der vorhergehenden Ansprüche, **dadurch gekennzeichnet, dass** ein Speichermedium zum Datenaustausch zwischen Basisstation und Fahrzeug vorgesehen ist, auf welchem Speichermedium Fahrdaten gespeichert sind, die den Zugriff einer Person auf das Fahrzeug regeln, und dass in der Steuerung eine Vergleichsschaltung angeordnet ist, die die Daten auf dem Speichermedium mit gespeicherten Benutzerdaten (Zugriffsbedingungen) vergleicht und die Bedienung des Fahrzeugs durch eine Person sperrt, wenn die in der Steuerungseinheit gespeicherten Zugriffsbedingungen nicht erfüllt sind.

7. Informationssystem nach einem der vorhergehenden Ansprüche, **dadurch gekennzeichnet, dass** die Basisstation über eine Schnittstelle an ein Datenübertragungsnetz angeschlossen ist, über das die weiteren Informationen von einem zentralen Server an den Speicher der Basisstation übermittelbar sind.

8. Informationssystem nach Anspruch 7, **dadurch gekennzeichnet, dass** das Datenübertragungsnetz zur übertragung von Fahrdaten von dem Speicher der Basisstation zu dem zentralen Server ausgebildet ist.

9. Informationssystem nach Anspruch 8, **dadurch gekennzeichnet, dass** an das Datenübertragungsnetz wenigstens ein Server angeschlossen ist, der an jede Basisstation weitere Informationen übermittelt und Fahrdaten von den Basisstationen empfängt.

10. Informationssystem nach einem der vorhergehenden Ansprüche, **dadurch**
**gekennzeichnet, dass** die Schnittstelle der Basisstation über eine Schreibvorrichtung zum übertragen von Fahrdaten und weiteren Daten auf das Speichermedium verfügt, und dass die Basisstation über eine Lesevorrichtung zum Lesen der Fahrdaten vom Speichermedium verfügt.

11. Informationssystem nach einem der vorhergehenden Ansprüche, **dadurch gekennzeichnet, dass** die Steuerungseinheit des Fahrzeugs mit Sensoren zur Erfassung von Fahrdaten wie z. B. Batteriespannung, Treibstoffvorrat, zurückgelegte Wegstrecke, Temperatur von Anriebsteilen verbunden ist.

12. System zur Benutzungsdatenerfassung oder einer darauf basierenden Benutzungsabrechnung von elektrisch oder motorisch betriebenen Geräten, wobei unter Benutzungsdaten die beim Betrieb des Gerätes anfallenden Daten verstanden werden, umfassend:
- eine im Bereich eines Gerätegebers, z.B. eines Vermieters, Verleihers oder einer Leasing-Firma angeordnete Basisstation, die eine Steuerung und einen Speicher zur Erfassung von Benut zungs- und/oder Abrechnungsdaten aufweist,
- eine an dem Gerät angeordnete Steuerungseinheit zur Erfassung und Verarbeitung von Benutzungs/Abrechnungsdaten,
- eine sowohl an der Basisstation als auch am Gerät vorgesehene Schreib/Leseeinrichtung für ein Speichermedium zur Übertragung zumindest von Benutzungs/Abrechnungsdaten zwischen der Basisstation und der Steuerungseinheit,
- die Steuerungseinheit schreibt die beim Betrieb des Geräts anfallenden Benutzungs/Abrechnungsdaten auf das Speichermedium und/oder verändert die auf dem Speichermedium befindlichen Benutzungs/Abrechnungsdaten, und
- Sollwerte oder andere Betriebsparameter werden von dem Speichermedium in das Gerät übertragen und/oder die Steuerungseinheit führt vor Inbetriebnahme des Geräts nach dem Einführen des Speichermediums in die Schreib/Leseeinrichtung einen Vergleich der auf dem Speichermedium befindlichen Abrechnungs-/Benutzungsdaten mit Soll- und/oder Vergleichswerten durch und aktiviert/sperrt in Abhängigkeit von dem Vergleichsergebnis den Betrieb des Geräts.

13. System nach Anspruch 12, **dadurch gekennzeichnet, dass** das Speichermedium einen Speicherplatz für Soll- und/oder Vergleichswerte zur Übertragung von der Basis auf das Gerät aufweist.

14. System nach einem der vorherigen Ansprüche 12 bis 14, **dadurch gekennzeichnet, dass** das Gerät eine mit der Steuerungseinheit verbundene Uhr zur Generierung von Benutzungs/Abrechnungsdaten aufweist.

15. System nach Anspruch 14, **dadurch gekennzeichnet, dass** die Steuerungseinheit Datensätze erzeugt, die sowohl die Benutzungsdauer als auch den Beginn und das Ende jeder Benutzung umfassen, welche Datensätze als Benutzungsdaten in der Steuerungseinheit des Geräts in Abrechnungsdaten umgerechnet und auf einen Speicherplatz des Speichermediums geschrieben oder zu/von dem Inhalt des Speicherplatzes addiert/subtrahiert werden und/oder als Benutzungsdaten auf dem Speichermedium gespeichert werden.

16. System nach einem der vorherigen Ansprüche 12 bis 15, **dadurch gekennzeichnet, dass** das Gerät eine mit der Steuerungseinheit verbundene Leistungsmesseinrichtung zur Generierung von Abrechnungs/Benutzungsdaten aufweist.

17. System nach einem der vorherigen Ansprüche 12 bis 16, **dadurch gekennzeichnet, dass** das Gerät eine mit der Steuerungseinheit verbundene Messeinrichtung für die gefahrenen Strecken zur Generierung von Benutzungs/Abrechnungsdaten aufweist.

18. System nach einem der vorhergehenden Ansprüche 12 bis 17, **dadurch gekennzeichnet, dass** die Basisstation über eine Schnittstelle an ein Datenübertragungsnetz angeschlossen ist, über das Abrechnungs/Benutzungsdaten und/oder Sollwerte zwischen einem zentralen Server und der Basisstation übermittelbar sind.

19. System nach einem der vorhergehenden Ansprüche 12 bis 18, **dadurch gekennzeichnet, dass** die Steuerungseinheit des Geräts mit Sensoren zur Erfassung von Benutzungsdaten wie z. 3. Batteriespannung, Stromfluß, Treibstoffvorrat, zurückgelegte Wegstrecke, Wegrichtung, Temperatur von Antriebsteilen verbunden ist.

20. System nach einem der vorhergehenden Ansprüche 12 bis 19, **dadurch gekennzeichnet, dass** das Gerät ein elektrisch oder motorisch betriebenes Golffahrzeug ist und die Basisstation im Clubhaus angeordnet ist.

21. System nach einem der vorhergehenden Ansprüche 12 bis 20, **dadurch gekennzeichnet, dass** das Speichermedium eine Chipkarte oder Magnetkarte ist.

22. System nach einem der vorhergehenden Ansprüche 12 bis 21, **dadurch gekennzeichnet, dass** die Steuerungseinheit des Geräts über die Schreib/Leseeinrichtung Daten aus dem Speichermedium abfragt und aufgrund eines Datenvergleichs mit Referenzdaten im eigenen Speicher die Gültigkeit des Speichermediums überprüft und auf der Basis des Vergleichsergebnisses das Gerät aktiviert/inaktiviert.

23. System nach einem der vorhergehenden Ansprüche 12 bis 22, **dadurch gekennzeichnet, dass** die Daten in codierter Form auf das Speichermedium geschrieben werden.

24. System nach einem der vorhergehenden Ansprüche 12 bis 23, **dadurch gekennzeichnet, dass** das Speichermedium einen Speicherplatz für das Bestimmungsgerät aufweist, für welches die Benutzung freigegeben werden soll.

25. System nach einem der vorhergehenden Ansprüche 12 bis 24, **dadurch gekennzeichnet, dass** die Abrechnungsdaten geräte- und kundenspezifische Daten enthalten.

## Claims

1. An information system for displaying data on a vehicle for transporting at least one golfer, including:
- a base station arranged in the area of a club or golf course comprising a control and a memory for acquiring travel data and other information,
- a control unit arranged on said vehicle comprising at least one first control logic for processing and displaying said travel data and a second control logic for processing and displaying said further information on a graphic display arranged on said vehicle,
- an interface provided on both said base station and said vehicle for transferring at least said travel data and further information between said base station and said control unit
wherein said control unit compares said transferred and/or travel data materializing during operation of said vehicle to predetermined reference values and, depending on the result of said comparison, stores/changes and/or displays momentary travel data on said display and/or directly affects operation of said vehicle, and said second control logic displays said further information on said graphic display depending on said travel data and/or the operating status of said vehicle.

2. The information system as set forth in claim 1,
**characterized in that**
said control unit is provided with a third control logic for processing and displaying game data.

3. The information system as set forth in claim 2,
**characterized in that**
an input device for entering game data into said control unit is arranged on said vehicle.

4. The information system as set forth in any of the preceding claims, **characterized in that**
on the basis of said operating conditions of said vehicle and/or on the basis of said user and input actions said second control logic dictates when said further information is to be displayed on said display.

5. The information system as set forth in claim 4,
**characterized in that**
said second control logic senses operating conditions such as power up and/or lengthy OFF periods of operation or entry via operation sensors to then prompt said further information to be displayed on said display.

6. The information system as set forth in any of the preceding claims,
**characterized in that**
for swapping data between said base station and vehicle a storage medium is provided, on which said travel data is stored regulating access of a person to said vehicle and that arranged in said control is a comparison circuit which compares the data on said storage medium to stored user data (access requirements) and prohibits usage of said vehicle by a person when said access requirements stored in said control unit fail to be satisfied.

7. The information system as set forth in any of the preceding claims,
**characterized in that**
said base station is connected via an interface to a data transfer network, via which said further information can be transferred from a central server to said memory of said base station.

8. The information system as set forth in claim 7,
**characterized in that**
said data transfer network is configured for transferring travel data from said memory of said base station to said central server.

9. The information system as set forth in claim 8,
**characterized in that**
connected to said data transfer network is at least one server transferring further information to each base station and receiving travel data from said base stations.

10. The information system as set forth in any of the preceding claims,
**characterized in that**
said interface of said base station is provided with a write means for transferring travel data and further data to said storage medium and that said base station is provided with a read means for reading travel data from said storage medium.

11. The information system as set forth in any of the preceding claims,
**characterized in that**
said control unit on said vehicle is connected to sensors for sensing travel data such as e.g. battery voltage, fuel level, distance-gone, drive component temperatures.

12. A system for accounting usage and/or acquiring usage data relating to electrically or engine-powered items of equipment, whereby usage data refer to those data which materializes during operation of said equipment, including
- a base station arranged in the area of an equipment provider, e.g. a renting, loan or leasing company, said base station comprising a control and a memory for acquiring usage and/or accounting data,
- a control unit arranged on the equipment item for acquiring and processing usage/accounting data,
- a write/read means provided on both said base station and said equipment item for a storage medium for transferring at least usage/accounting data between said base station and said control unit,
- said control unit writes said usage/accounting data resulting during operation of said equipment item onto said storage medium and/or modifies said usage/accounting data held on said storage medium, and
- reference values or other parameters of usage are transferred from the storage medium into the equipment and/or the control unit compares before power up of the equipment after insertion of the storage medium into the write/read means the usage/account data on the storage medium with reference values and/or comparison values and activates/deactivates the usage of the equipment based on the result of the comparison.

13. The system as set forth in claim 12,
**characterized in that**
said storage medium comprises a storage location for said reference and/or comparison values for transfer from said base to said equipment item.

14. The system as set forth in claims 12 to 13,
**characterized in that**
said equipment item comprises connected to said control unit a clock for generating usage/accounting data.

15. The system as set forth in claim 14,
**characterized in that**
said control unit generates sets of data including both the duration and start/end of each usage, said sets of data being converted as usage data in said control unit of said equipment item into accounting data and written onto a storage location of said storage medium or added/subtracted to/from the contents of said storage location and/or stored as usage data on said storage medium.

16. The system as set forth in claim 12 to 15,
**characterized in that**
said equipment item comprises connected to said control unit a power sensing means for generating usage/accounting data.

17. The system as set forth in claim 12 to 16,
**characterized in that**
said equipment item comprises connected to said control unit a distance-gone sensing means for generating usage/accounting data.

18. The system as set forth in claim 12 to 17,
**characterized in that**
said base station is connected via an interface to a data transfer network, said usage/accounting data and/or reference values being transferable between a central server and said base station via said data transfer network.

19. The system as set forth in claim 12 to 18,
**characterized in that**
said control unit on said equipment item is connected to sensors for sensing usage data such as e.g. battery voltage, current flow, fuel level, distance-gone, direction of travel, temperature of drive components.

20. The system as set forth in claim 12 to 19,
**characterized in that**
said equipment item is an electric or engine-powered golfing vehicle and said base station is located in the club house.

21. The system as set forth in claim 12 to 20,
**characterized in that**
said storage medium is a chip card or magnetic card.

22. The system as set forth in claim 12 to 21,
**characterized in that**
via said write/read means said control unit on said equipment item retrieves data from said storage medium and on the basis of a data comparison with reference data in its own memory checks the validity of said storage medium and activates/deactivates said equipment item on the basis of the result of said comparison.

23. The system as set forth in claim 12 to 22,
**characterized in that**
said data is written in coded form on said storage medium.

24. The system as set forth in claim 12 to 23,
**characterized in that**
said storage medium comprises a storage location for said item of equipment to be released for use.

25. The system as set forth in claim 12 to 24,
**characterized in that**
said accounting data are data specific to said equipment item and customer.

## Revendications

1. Systèmes d'information pour afficher des données sur un véhicule automobile destiné à transporter au moins une personne lors d'un jeu de golf, comprenant :
- une station de base disposée dans la zone d'un terrain de club ou de jeu qui présente une commande et une mémoire pour déterminer les données de conduite et d'autres informations,
- une unité de commande disposée sur le véhicule automobile, laquelle unité présente au moins une première logique de commande pour le traitement et l'affichage des données de conduite et une deuxième logique de commande pour le traitement et l'affichage d'autres informations sur une unité d'affichage graphique disposée sur le véhicule automobile,
- une interface prévue aussi bien sur la station de base qu'également sur le véhicule automobile pour transférer au moins les données de conduite et d'autres informations entre la station de base et l'unité de commande,
- où l'unité de commande compare les données de conduite transférées et /ou générées lors du fonctionnement du véhicule automobile avec des valeurs de consigne prédéterminées et stocke / transforme et / ou affiche sur l'unité d'affichage en fonction du résultat de la comparaison, les données de conduite actuelles et / ou agit sur le fonctionnement du véhicule automobile, et où la deuxième logique de commande affiche sur l'unité d'affichage graphique d'autres informations en fonction des données de véhicule et / ou de l'état de fonctionnement du véhicule automobile.

2. Système d'information selon la revendication 1, **caractérisé en ce que** l'unité de commande dispose d'une troisième logique de commande pour le traitement et l'affichage des données de jeu.

3. Système d'information selon la revendication 2, **caractérisé en ce qu'**un dispositif de saisie pour la saisie de données est disposée dans l'unité de commande sur le véhicule automobile.

4. Système d'information selon une des revendications précédentes, **caractérisé en ce que** la deuxième logique de commande détermine à l'aide des conditions de service du véhicule automobile et / ou à l'aide d'opérations d'actionnement et de saisie lorsque les autres informations sont affichées sur l'unité d'affichage.

5. Système d'information selon la revendication 4, **caractérisé en ce que** la deuxième logique de commande reconnaît des états de fonctionnement tels que la mise en service et / ou des pauses d'actionnement ou de saisie plus longues par des capteurs de fonctionnement et permet donc l'affichage des autres informations sur l'unité d'affichage.

6. Système d'information selon une des revendications précédentes, **caractérisé en ce qu'**il est prévu un moyen de stockage pour l'échange de données entre la station de base et le véhicule automobile, sur lequel moyen de stockage on a stocké des données de conduite qui règlent l'accès d'une personne au véhicule automobile et **en ce qu'**un circuit de comparaison est disposé dans la commande, lequel circuit compare les données sur le moyen de stockage avec les données d'utilisation stockées (conditions d'accès) et bloque l'actionnement du véhicule automobile par une personne lorsque les conditions d'accès stockées dans l'unité de commande ne sont pas remplies.

7. Système d'information selon une des revendications précédentes, **caractérisé en ce que** la station de base est reliée par une interface à un réseau de transfert de données, par lequel réseau les autres informations peuvent être transmises à partir d'un serveur central à une mémoire de la station de base.

8. Système d'information selon la revendication 7, **caractérisé en ce que** le réseau de transfert de données est formé pour transmettre les données de conduite de la mémoire de la station de base vers le serveur central.

9. Système d'information selon la revendication 8, **caractérisé en ce que** le réseau de transfert de données est relié à au moins un serveur qui transfère d'autres informations à chaque station de base et reçoit des données de conduite des stations de base.

10. Système d'information selon une des revendications précédentes, **caractérisé en ce que** l'interface de la station de base dispose d'un dispositif d'écriture pour transférer des données de conduite et d'autres données sur le moyen de stockage et **en ce que** la station de base dispose d'un dispositif de lecture pour lire les données de conduite à partir du moyen de stockage.

11. Système d'information selon une des revendications précédentes, **caractérisé en ce que** l'unité de commande du véhicule automobile est relié à des capteurs pour détecter des données de conduite, comme par exemple, la tension de la batterie , la réserve de carburant , des trajets parcourus, la température des pièces de frottement.

12. Système pour la détection de données d'utilisation ou d'un décompte d'utilisation basé sur ladite détection d'appareils actionnés de façon électrique ou par un moteur ; on comprend par le terme données d'utilisation, les données générées lors du fonctionnement de l'appareil, comprenant :
- une station de base disposée dans la zone d'un donneur d'appareil , par exemple, d'un loueur, d'un prêteur ou d'une société de leasing, laquelle station de base présente une commande et une mémoire pour détecter des données d'utilisation et / ou de décompte,
- un dispositif d'écriture / lecture prévu aussi bien dans la station de base qu'également sur l'appareil pour un moyen de stockage afin de transférer au moins des données d'utilisation / de décompte entre la station de base et l'unité de commande,
- l'unité de commande écrit les données d'utilisation / de décompte générées lors du fonctionnement de l'appareil sur le moyen de stockage et /ou modifie les données d'utilisation / de décompte se trouvant sur le moyen de stockage, et
- des valeurs de consigne ou d'autres paramètres de fonctionnement sont transférées du moyen de stockage dans l'appareil et / ou l'unité de commande effectue, avant la mise en service de l'appareil après l'introduction du moyen de stockage dans le dispositif d'écriture / lecture, une comparaison des données de décompte / d'utilisation, se trouvant sur le moyen de stockage, avec des valeurs de consigne et / ou de comparaison et active / arrête en fonction du résultat de comparaison, le fonctionnement de l'appareil.

13. Système selon la revendication 12, **caractérisé en ce que** le moyen de stockage présente un endroit de stockage pour des valeurs de consigne et /ou de comparaison pour le transfert à partir de la base sur l'appareil.

14. Système selon une des revendications 12 à 13, **caractérisé en ce que** l'appareil une horloge reliée à une unité de commande pour générer des données d'utilisation / de décompte.

15. Système selon la revendication 14, **caractérisé en ce que** l'unité de commande produit des jeux de données qui comprennent la durée d'utilisation ainsi que le début et la fin de chaque utilisation également ; lesquels jeux de données sont converties en tant que données d'utilisation dans l'unité de commande de l'appareil en des données de décompte et sont écrites sur un endroit de stockage du moyen de stockage et sont ajoutées / soustraites au / du contenu de l'endroit de stockage et / ou sont stockées en tant que données d'utilisation sur le moyen de stockage.

16. Système selon une des revendications précédentes 12 à 15, **caractérisé en ce que** l'appareil présente un dispositif de mesure de performance relié à l'unité de commande pour générer des données de décompte / d'utilisation.

17. Système selon une des revendications précédentes 12 à 16, **caractérisé en ce que** l'appareil présente un dispositif de mesure relié à une unité de commande pour les trajets parcourus afin de générer des données d'utilisation / de décompte.

18. Système selon une des revendications précédentes, **caractérisé en ce que** la station de base est reliée au moyen d'une interface à un réseau de transmission de données grâce auquel il est possible de transmettre des données de décompte / d'utilisation et / ou des valeurs de consigne entre un serveur central et la station de base.

19. Système selon une des revendications précédentes 12 à 18, **caractérisé en ce que** l'unité de commande de l'appareil est reliée par des capteurs pour détecter des données d'utilisation, comme par exemple, la tension de batterie, le flux de courant, la réserve de carburant, les trajets parcourus, la direction du trajet, la température des pièces de frottement.

20. Système selon une des revendications précédentes 12 à 19, **caractérisé en ce que** l'appareil est un véhicule de golf entraîné de façon électrique ou à moteur et **en ce que** la station de base est disposée dans la maison du club.

21. Système selon une des revendications précédentes 12 à 20, **caractérisé en ce que** le moyen de stockage est une carte à puce ou une carte magnétique.

22. Système selon une des revendications précédentes 12 à 21, **caractérisé en ce que** l'unité de commande de l'appareil extrait des données à partir du moyen de stockage par l'intermédiaire du dispositif d'écriture / lecture et vérifie la validité du moyen de stockage par une comparaison des données avec les données de référence dans la mémoire propre et active / désactive l'appareil sur la base des résultats de comparaison.

23. Système selon une des revendications précédentes 12 à 22, **caractérisé en ce que** les données sont écrites sous une forme codée sur le moyen de stockage.

24. Système selon une des revendications précédentes 12 à 23, **caractérisé en ce que** le moyen de stockage présente un endroit de stockage pour l'appareil cible auquel on donne une totale liberté d'utilisation.

25. Système selon une des revendications précédentes 12 à 24, **caractérisé en ce que** les données de décompte comprennent des données spécifiques à l'appareil et au client.
